# EUROPÄISCHE PATENTSCHRIFT

(11) **EP 3 162 181 B1**
(45) Veröffentlichungstag und Bekanntmachung des Hinweises auf die Patenterteilung: **29.08.2018**
(21) Anmeldenummer: 16401072.0
(22) Anmeldetag: 21.10.2016
(51) Int. Cl.: A01D 34/00, A01D 34/62

(54) **MOBILE BEARBEITUNGSEINHEIT ZUR PFLEGE VON GRÜNFLÄCHEN**
MOBILE MACHINING UNIT FOR THE CULTIVATION OF GREEN AREAS
UNITÉ DE TRAITEMENT MOBILE DESTINÉE À L'ENTRETIEN D'ESPACES VERTS

(30) Priorität: 28.10.2015 DE 102015118369
(43) Veröffentlichungstag der Anmeldung: 03.05.2017
(73) Patentinhaber: Amazonen-Werke H. Dreyer GmbH & Co. KG, 49205 Hasbergen (DE)
(72) Erfinder: Klein, Laurent, 57910 HAMBACH (FR)

(56) Entgegenhaltungen:
- EP-A1- 0 442 290
- EP-B1- 0 598 266
- DE-A1- 2 462 240
- US-A- 4 947 630
- US-A- 5 678 396
- US-A- 5 732 538

## Beschreibung

Die Erfindung betrifft eine mobile Bearbeitungseinheit zur Pflege von Grünflächen gemäß dem Oberbegriff des Patentanspruches 1.

Eine mobile Bearbeitungseinheit zur Pflege von Grünflächen, insbesondere von Rasen- und Wiesenflächen gemäß des Oberbegriffes des Anspruches 1 ist bereits in der US 5 678 396 A beschrieben. Bei dieser mobilen Bearbeitungseinheit zur Pflege von Grünflächen ist ein Bearbeitungsrotor vorgesehen, hinter welchem in Fahrtrichtung gesehen, eine mit einer Abstreifereinrichtung zusammenwirkende Walze angeordnet ist. Die Abstreifereinrichtung ist bei dieser hinter dem Bearbeitungsrotor angeordneten Walze, in Bewegungsrichtung der Bearbeitungseinheit betrachtet, hinter der Walze angeordnet. Weiterhin ist bei der Bearbeitungseinheit, in Fahrtrichtung gesehen, vor dem Bearbeitungsrotor eine weitere Walze angeordnet, bei welcher sich die Abstreifereinrichtung zwischen dem Bearbeitungsrotor und der Walze befindet.

Bei dem Bearbeiten der Grünflächen durch den Bearbeitungsrotor fallen einzelne Bestandteile auf den Boden oder werden von der Abstreifereinrichtung der hinteren Walze abgestreift und können dann folglich nicht durch den Bearbeitungsrotor aufgenommen werden. Dies führt dazu, dass die somit verbleibenden Reste an der dem Bearbeitungsrotor in Fahrtrichtung betrachtet, nachfolgend angeordneten Walze haften bleiben, was insbesondere bei feuchten Witterungsbedingungen dazu führt, dass sich diese Reste zusammenballen und verklumpen. Um dies zu vermeiden ist es bereits bekannt, Abstreifereinrichtungen vorzusehen, die gegen die Oberfläche der Walze gerichtet sind und die an der Walze anhaftende Bestandteile entfernen. Diese anhaftenden Bestandteile werden durch die Abstreifereinrichtung hinter der Walze abgestreift, was in nachteiliger Weise zur Folge hat, dass die an der Walze anhaftenden Reste zwar zuverlässig abgestreift werden können, jedoch anschließend auf den Boden fallen und dort zurück bleiben. Damit ergibt sich mit einer derartigen mobilen Bearbeitungseinheit nicht immer ein zufriedenstellendes Bild der Bearbeitung der Grünfläche, da zurückbleibende Reste der Grünabfälle unerwünscht sind und störend wirken.

Eine weitere mobile Bearbeitungseinheit zur Pflege von Grünflächen, insbesondere von Rasen- und Wiesenflächen, ist bereits in der EP 0 712 568 B1 beschrieben. Die Bearbeitungseinheit wird mit einem angetriebenen Fahrzeug gekoppelt und als "Mähwerk" bezeichnet. Sie besteht nach dem Offenbarungsgehalt der Druckschrift aus einem quer zur Fahrtrichtung ausgerichteten, um eine Rotationsachse drehbaren und Bearbeitungswerkzeuge aufweisenden Bearbeitungsrotor, der in einem Gehäuse angeordnet ist. Der Bearbeitungsrotor verfügt entlang seines Außenumfanges über eine Vielzahl einzelner Bearbeitungswerkzeuge, die je nach Ausführung dazu geeignet sind, die Grünfläche zu pflegen, das heißt, beispielsweise einen Rasen abzumähen, ihn zu vertikutieren oder einfach Laub beziehungsweise Unrat aufzusammeln. Bezogen auf die Fahrtrichtung sind vor und hinter dem Bearbeitungsrotor darüber hinaus durch einen Höhenführungsrahmen verbundene Führungselemente vorhanden, wobei es sich hierbei einerseits um frontseitige Laufräder und diesen gegenüberliegend, also rückseitig des Bearbeitungsrotors, um eine Walze handelt, die als Druckwalze wirkt. Zur Einstellung der Arbeitshöhe des Bearbeitungsrotors und damit der Schnitthöhe weist die Vorrichtung zur Pflege von Grünflächen nach der EP 0 712 568 B1 ferner eine Verstelleinrichtung auf.

Die Arbeitsweise einer derartigen mobilen Bearbeitungseinheit gestaltet sich dabei so, dass die von dem Bearbeitungsrotor abgetrennten oder aufgenommenen Bestandteile der Grünfläche durch die Rotationsbewegung des Bearbeitungsrotors und gegebenenfalls unter Zuhilfenahme von hierzu geeigneten Fördereinrichtungen beispielsweise in einen Auffangbehälter abtransportiert werden. Dabei können einzelne Bestandteile auf den Boden fallen und werden folglich nicht aufgenommen. Dies führt dazu, dass die somit verbleibenden Reste an der dem Bearbeitungsrotor in Fahrtrichtung betrachtet nachfolgend angeordneten Walze haften bleiben, was insbesondere bei feuchten Witterungsbedingungen dazu führt, dass sich diese Reste zusammenballen und verklumpen. Um dies zu vermeiden ist es bereits bekannt, Abstreifereinrichtungen vorzusehen, die gegen die Oberfläche der Walze gerichtet sind und die an der Walze anhaftende Bestandteile entfernen.

Eine derartige Mobile Bearbeitungseinheit zur Pflege von Grünflächen, insbesondere von Rasen- und Wiesenflächen geht aus der EP 0 598 266 B1 hervor. Hierbei ist die Abstreifereinrichtung in Fahrtrichtung betrachtet hinter der Walze angeordnet, was in nachteiliger Weise zur Folge hat, dass die an der Walze anhaftenden Reste zwar zuverlässig abgestreift werden können, jedoch anschließend auf den Boden fallen und dort zurück bleiben. Damit ergibt sich mit einer derartigen mobilen Bearbeitungseinheit nicht immer ein zufriedenstellendes Bild der Bearbeitung der Grünfläche, da zurückbleibende Reste der Grünabfälle unerwünscht sind und störend wirken.

Der Erfindung liegt die Aufgabe zugrunde, eine mobile Bearbeitungseinheit zur Pflege von Grünflächen bereitzustellen, bei der die Aufnahme der abgetrennten oder aufgesammelten Bestandteile der Grünfläche in verbesserter Weise erfolgt.

Die Erfindung löst diese Aufgabenstellung mit den Merkmalen des Patentanspruches 1.

Weitere Ausgestaltungen der Erfindung sind Gegenstand der Unteransprüche.

Eine mobile Bearbeitungseinheit zur Pflege von Grünflächen, insbesondere von Rasen- und Wiesenflächen, die einen quer zur Fahrtrichtung ausgerichteten, um eine Rotationsachse drehbar gelagerten und Bearbeitungswerkzeuge aufweisenden Bearbeitungsrotor umfasst, wobei mindestens eine, mit einer Abstreifereinrichtung zusammenwirkende Walze vorhanden ist, wurde erfindungsgemäß dahingehend weitergebildet, dass die der Walze zugeordnete Abstreifereinrichtung zwischen dem Bearbeitungsrotor und der Walze angeordnet ist.

Anders ausgedrückt wird die Abstreifereinrichtung, in Bewegungs- oder Fahrtrichtung der Bearbeitungseinheit betrachtet, vor der Walze angeordnet. Diese Maßnahme hat zur Folge, dass die an der Walze anhaftenden Bestandteile zuverlässig abgestreift und darüber hinaus durch die Rotationsbewegung des Bearbeitungsrotors erfasst und abtransportiert werden können. Insgesamt ergibt sich damit ein wesentlich verbessertes Bild bei der Bearbeitung und Pflege von Grünflächen, weil die Menge an zurückbleibenden Resten sehr stark reduziert, beziehungsweise gänzlich vermieden wird.

Wird gemäß einer ersten Ausgestaltung der Erfindung die Abstreifereinrichtung unter Spannung in einem den Bearbeitungsrotor aufnehmenden Gehäuse oder unter Spannung in einem Höhenführungsrahmen der mobilen Bearbeitungseinheit aufgenommen, so lässt sich damit eine vereinfachte Montage realisieren und gleichzeitig die Anlage der Abstreifereinrichtung über ihre gesamte Breite an der Walze verbessern.

Diesem Gedanken folgend geht eine weiterbildende Maßnahme dahin, dass die Abstreifereinrichtung unter einer Spannung gegen die Walze wirkend in der mobilen Bearbeitungseinheit aufgenommen ist. Durch eine erhöhte Spannung zwischen der Abstreifereinrichtung und der Walze erhöht und verbessert sich die Wirkung des Abstreifens der an der Walze haftenden von der Pflege der Grünfläche stammenden Reste.

Eine besonders einfache Lösung für die Gestaltung der Abstreifereinrichtung besteht darin, dass diese als ein an der Mantelfläche der Walze anliegender Stab ausgeführt ist. Bevorzugt handelt es sich hierbei um einen Vierkantstab. Eine stabförmige Ausführung der Abstreifereinrichtung vermeidet beispielsweise eine aufwändige Montage und vereinfacht die Halterung der Abstreifereinrichtung innerhalb der Bearbeitungseinheit.

Eine weitere, alternative Ausführungsvariante der Abstreifereinrichtung ist darin zu sehen, dass diese als ein an der Mantelfläche der Walze anliegendes Federblech ausgeführt ist. Ein Federblech bringt von sich aus eine Anlage an der Walze unter einer Spannungswirkung mit sich, so dass zur Umsetzung dieser Maßnahme keine zusätzlichen Aufwendungen erforderlich sind. Die Wirkung des Abstreifens der Reste der gepflegten Grünfläche kann somit zusätzlich verbessert werden.

Eine ähnliche Lösung besteht darüber hinaus darin, dass die Abstreifereinrichtung als eine an der Mantelfläche der Walze anliegende Schneidkante ausgeführt ist. Mit einer derartigen Schneidkante können die an der Walze haftenden Bestandteile der Grünfläche in der Regel hundertprozentig von der Oberfläche der Walze entfernt werden. Zugleich ergibt sich eine vorteilhafte Reinigungswirkung der Walze, so dass der Wartungsaufwand der Bearbeitungseinheit dadurch zusätzlich reduziert werden kann.

Jede Bearbeitungseinheit unterliegt durch ihren alltäglichen Einsatz einem Verschleiß, dem jedoch beispielsweise durch Wartungsmaßnahmen begegnet werden kann. Hierzu zählt auch der Einsatz von Schmiermitteln, durch die die Reibung zwischen miteinander kontaktierenden, beziehungsweise bewegten Bauteilen reduziert wird. Aus diesem Grund wird vorgeschlagen, dass die erfindungsgemäße, mobile Bearbeitungseinheit eine ein Schmiermittel zwischen Walze und Abstreifereinrichtung einbringende Schmiermittelversorgungseinrichtung aufweist. Durch diese Schmiermittelversorgungseinrichtung kann nicht nur der zuvor erwähnte Verschleiß reduziert werden, sondern ein positiver Nebeneffekt ergibt sich auch durch die sich einstellenden Gleiteigenschaften zwischen Walze und Abstreifereinrichtung, was die Wirkung der Abstreifereinrichtung weiter verbessert.

Natürlich kann eine erfindungsgemäße, mobile Bearbeitungseinheit als selbstfahrendes Gerät ausgeführt sein oder manuell fortbewegt werden. Eine hierzu alternative und sehr vorteilhafte Lösung besteht jedoch gemäß einer Weiterbildung der Erfindung darin, dass die mobile Bearbeitungseinheit mit einem Antriebsfahrzeug koppelbar ist. Diese Ausführung hat den Vorteil, dass die mobile Bearbeitungseinheit von dem Antriebsfahrzeug lösbar ist und beispielsweise separat aufbewahrt werden kann, so dass dadurch wertvoller Stau- beziehungsweise Lagerraum gespart werden kann. Das Antriebsfahrzeug ist zudem bei entkoppelter Bearbeitungseinheit auch für andere Zwecke einsetzbar.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Fig. 1:: eine mobile Bearbeitungseinheit in einer teilweise geschnittenen Seitenansicht und eine vergrößerte Einzelheit dieser Bearbeitungseinheit
und
- Fig. 2:: die mobile Bearbeitungseinheit aus Fig. 1 in einer perspektivischen Darstellung mit Blickrichtung von unten sowie eine vergrößerte Einzelheit.

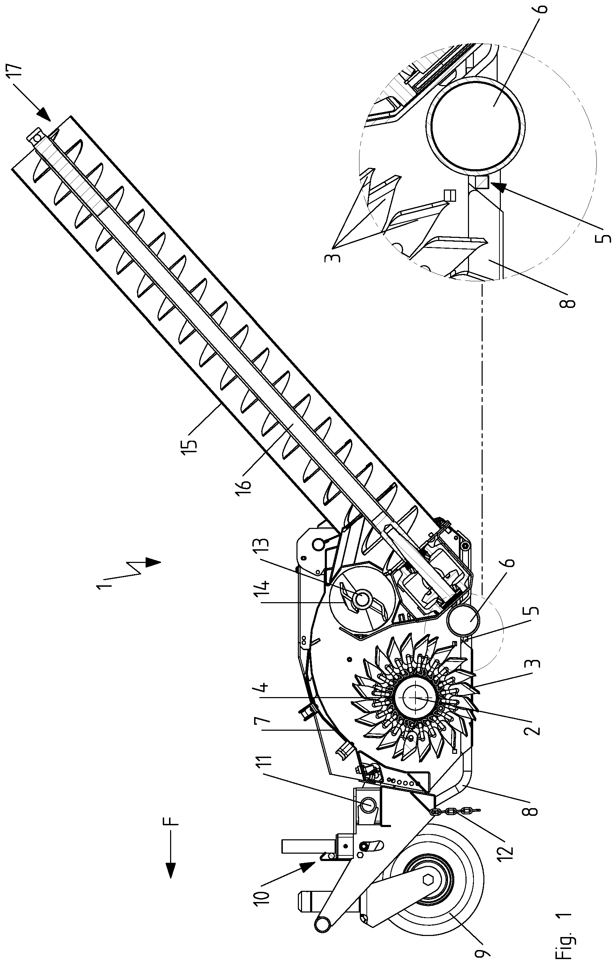

Die mobile Bearbeitungseinheit 1 gemäß Fig. 1 besteht in dem dargestellten Beispiel aus einem Gehäuse 7, in dem ein Bearbeitungsrotor 4 um eine Rotationsachse 2 drehbeweglich gelagert ist. Der Bearbeitungsrotor 4 rotiert hierbei im Ausführungsbeispiel in Uhrzeigerrichtung. Zur Pflege einer Grünfläche, bei der es sich beispielsweise um eine Rasen- oder Wiesenfläche handeln kann, wird der durch einen Antriebsmotor angetriebene Bearbeitungsrotor 4 in eine Rotationsbewegung versetzt, so dass die entlang seines Umfanges angeordneten Bearbeitungswerkzeuge 3 die Grünfläche in ihrer Länge kürzen und/oder Unrat oder Laub von der Grünfläche aufsammeln. Bei den Bearbeitungswerkzeugen 3 handelt es sich bei dem gezeigten Beispiel um Schneidmesser, so dass die Bearbeitungseinheit 1 in Fig. 1 ein Mähwerk ist. Diese Besonderheit geht deutlicher aus der vergrößerten Einzelheit in Fig. 1 hervor. Durch die Rotationsbewegung des Bearbeitungsrotors 4 wird das aufgenommene Gut innerhalb des Gehäuses 7 zu einer Transportschnecke 14 transportiert, die um eine quer zur Fahrtrichtung F angeordnete Schneckenachse 13 rotierend gelagert ist. Die Transportschnecke 14 führt die abgetrennten oder aufgesammelten Bestandteile der Grünfläche etwa mittig zusammen. In diesem zentralen Bereich der Transportschnecke 14 ist die unter einem schrägen Winkel verlaufende Förderschnecke 17 angeordnet, deren Aufgabe darin besteht, die von der Transportschnecke 14 zugeführten Materialien beispielsweise in einen Auffangbehälter zu transportieren, der jedoch in der Fig. 1 nicht gezeigt ist. Hierzu rotiert die Förderschnecke 17 um ihre Schneckenachse 16. Sie ist darüber hinaus in einem Förder- und/oder Schutzrohr 15 aufgenommen, so dass dadurch ein Förderschacht entsteht, innerhalb dessen die abgetrennten Bestandteile transportiert werden können. Die Bearbeitungseinheit 1 weist darüber hinaus einen zu dem Gehäuse 7 relativ bewegbaren Höhenführungsrahmen 8 auf, der in Fahrtrichtung F betrachtet, im vorderen Bereich zwei als Führungselemente wirkende Räder 9 aufweist, durch deren Höhenverstellung mittels eines Verstellmechanismus 10 die Schnitthöhe des Bearbeitungsrotors 4 verändert werden kann. Hierzu können die pendelnd gelagerten Räder 9 mit einem diese aufnehmenden Halter insgesamt um eine Schwenkachse 11 und ein mit der Schwenkachse 11 korrespondierendes Langloch verschwenkt werden. Unterhalb des Höhenführungsrahmens 8 ist zur Überbrückung des freien Abstandes zwischen dem Höhenführungsrahmen 8 und dem Untergrund darüber hinaus ein Schlagschutz 12 angeordnet, der verhindert, dass von dem Bearbeitungsrotor 4 erfasste Gegenstände, wie Steine, unkontrolliert in die Umgebung abgegeben werden und dient dadurch der Vermeidung von Verletzungen umstehender Personen beziehungsweise der Vermeidung von Beschädigungen von Gegenständen in unmittelbarer Umgebung der Bearbeitungseinheit 1. Auf der den Rädern 9 gegenüberliegenden Seite, also auf der Rückseite des Bearbeitungsrotors 4, ist darüber hinaus an dem Höhenführungsrahmen 8 eine Walze 6 vorhanden, die grundsätzlich dazu dient, den Untergrund zu glätten. Da diese Walze 6 unmittelbar über die frisch gepflegte Grünfläche bewegt wird, kommt es verstärkt dazu, dass Reste der Pflege der Grünfläche an der Walze 6 haften bleiben. Um zu vermeiden, dass diese Reste der Grünfläche oder auf dieser herumliegende Gegenstände an der Walze 6 haften bleiben und dort beispielsweise verklumpen, ist eine Abstreifereinrichtung 5 vorhanden, die, wie die vergrößerte Einzelheit in Fig. 1 deutlicher zeigt, im vorliegenden Fall aus einem Vierkantstab besteht, der unter elastischer Vorspannung an der Mantelfläche der Walze 6 anliegt und somit durch die Drehbewegung der Walze 6 seine Abstreifwirkung entfaltet. Anders ausgedrückt geleitet die Abstreifereinrichtung 5 an der Oberfläche der Walze 6 entlang. Dadurch wird die Walze 6 von den genannten Resten der Grünfläche befreit, so dass diese in den Spalt zwischen Bearbeitungsrotor 4 und Walze 6 gelangen, was zur Folge hat, dass die abgestreiften Bestandteile erneut vom Bearbeitungsrotor 4 erfasst und in der zuvor beschriebenen Weise zur Transportschnecke 14 transportiert werden, wo ihr Abtransport über die Förderschnecke 17 erfolgt. Mit dieser Lösung ist es damit möglich zu vermeiden, dass abgetrennte Bestandteile der Grünfläche nach der Bearbeitung derselben auf der Grünfläche liegen bleiben. Damit ergibt sich insgesamt eine verbesserte Pflege der Grünfläche, weil dadurch auch verhindert werden kann, dass sich in unerwünschter Weise Moos entwickelt oder Fäulnis entsteht.

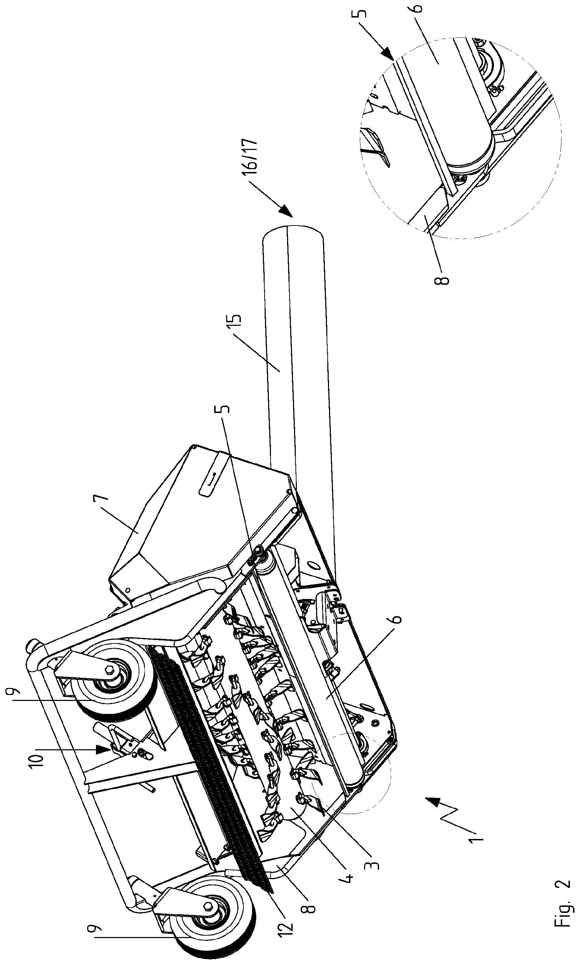

Aus der Fig. 2 geht die Bearbeitungseinheit 1 noch einmal in einer perspektivischen Ansicht von unten hervor. Hierbei wird deutlich, wie die entlang des Umfanges des Bearbeitungsrotors 4 vorhandenen Bearbeitungswerkzeuge 3 angeordnet sind. Die Bearbeitungswerkzeuge 3 verlaufen dabei in Wellenlinien. Weiterhin lässt die Fig. 2 deutlich erkennen, dass die Abstreifereinrichtung 5 als ein Vierkantstab ausgeführt ist und sich über die gesamte Breite parallel und äquidistant zu der Walze 6 erstreckt. Auf diese Weise kann sichergestellt werden, dass die Walze 6 komplett von Resten der Pflege der Grünfläche befreit wird. Deutlicher, als dies in Fig. 1 erkennbar war, geht aus der Fig. 2 auch hervor, dass im vorliegenden Beispiel zwei Räder 9 mit einem Abstand zueinander an dem Höhenführungsrahmen 8 angebracht sind.

### BEZUGSZEICHENLISTE:

- 1: Bearbeitungseinheit
- 2: Rotationsachse
- 3: Bearbeitungswerkzeug
- 4: Bearbeitungsrotor
- 5: Abstreifereinrichtung
- 6: Walze
- 7: Gehäuse
- 8: Höhenführungsrahmen
- 9: Rad
- 10: Verstellmechanismus
- 11: Schwenkachse
- 12: Schlagschutz
- 13: Schneckenachse
- 14: Transportschnecke
- 15: Schutzrohr
- 16: Schneckenachse
- 17: Förderschnecke

## Patentansprüche

1. Mobile Bearbeitungseinheit (1) zur Pflege von Grünflächen, insbesondere von Rasen- und Wiesenflächen, die einen quer zur Fahrtrichtung (F) ausgerichteten, um eine Rotationsachse (2) drehbar gelagerten und Bearbeitungswerkzeuge (3) aufweisenden Bearbeitungsrotor (4) umfasst, wobei mindestens eine, mit einer Abstreifereinrichtung (5) zusammenwirkende und in Fahrtrichtung gesehen hinter dem Bodenbearbeitungsrotor (4) angeordnete Walze (6) vorhanden ist, **dadurch gekennzeichnet, dass** die der Walze (6) zugeordnete Abstreifereinrichtung (5) zwischen dem Bearbeitungsrotor (4) und der Walze (6) und in Fahrtrichtung (F) der Bearbeitungseinheit (1) betrachtet, vor der Walze (6) angeordnet ist.

2. Mobile Bearbeitungseinheit nach Anspruch 1, **dadurch gekennzeichnet, dass** die Abstreifereinrichtung (5) vorzugsweise unter Spannung in einem den Bearbeitungsrotor (4) aufnehmenden Gehäuse (7) oder in einem Höhenführungsrahmen (8) der mobilen Bearbeitungseinheit (1) aufgenommen ist.

3. Mobile Bearbeitungseinheit nach einem der vorstehend genannten Ansprüche, **dadurch gekennzeichnet, dass** die Abstreifereinrichtung (5) unter einer Spannung gegen die Walze (6) wirkend in der mobilen Bearbeitungseinheit (1) aufgenommen ist.

4. Mobile Bearbeitungseinheit nach einem der vorstehend genannten Ansprüche, **dadurch gekennzeichnet, dass** die Abstreifereinrichtung (5) als ein an der Mantelfläche der Walze (6) anliegender Stab ausgeführt ist.

5. Mobile Bearbeitungseinheit nach einem der Ansprüche 1 bis 3, **dadurch gekennzeichnet, dass** die Abstreifereinrichtung (5) als ein an der Mantelfläche der Walze (6) anliegender Vierkantstab ausgeführt ist.

6. Mobile Bearbeitungseinheit nach einem der Ansprüche 1 bis 3, **dadurch gekennzeichnet, dass** die Abstreifereinrichtung (5) als ein an der Mantelfläche der Walze (6) anliegendes Federblech ausgeführt ist.

7. Mobile Bearbeitungseinheit nach einem der Ansprüche 1 bis 3, **dadurch gekennzeichnet, dass** die Abstreifereinrichtung (5) als eine an der Mantelfläche der Walze (6) anliegende Schneidkante ausgeführt ist.

8. Mobile Bearbeitungseinheit nach einem der vorstehend genannten Ansprüche, **dadurch gekennzeichnet, dass** die mobile Bearbeitungseinheit (1) eine ein Schmiermittel zwischen Walze (6) und Abstreifereinrichtung (5) einbringende Schmiermittelversorgungseinrichtung aufweist.

9. Mobile Bearbeitungseinheit nach einem der vorstehend genannten Ansprüche, **dadurch gekennzeichnet, dass** die mobile Bearbeitungseinheit (1) mit einem Antriebsfahrzeug koppelbar ist.

## Claims

1. Mobile processing unit (1) for the maintenance of green areas, in particular lawn and meadow areas, said mobile processing unit comprising a processing rotor (4) which is oriented transversely with respect to the direction of travel (F), is mounted rotatably about an axis of rotation (2) and has processing tools (3), wherein there is at least one roller (6) which interacts with a stripping device (5) and is arranged behind the ground-processing rotor (4) as seen in the direction of travel, **characterized in that** the stripping device (5) assigned to the roller (6) is arranged between the processing rotor (4) and the roller (6), as viewed in the direction of travel (F) of the processing unit (1).

2. Mobile processing unit according to Claim 1, **characterized in that** the stripping device (5) is preferably accommodated under tension in a housing (7) accommodating the processing rotor (4) or in a height-guiding frame (8) of the mobile processing unit (1).

3. Mobile processing unit according to either of the preceding claims, **characterized in that** the stripping device (5) is accommodated in the mobile processing unit (1) in a manner acting under a tension against the roller (6).

4. Mobile processing unit according to one of the preceding claims, **characterized in that** the stripping device (5) is designed as a bar which lies against the lateral surface of the roller (6).

5. Mobile processing unit according to one of Claims 1 to 3, **characterized in that** the stripping device (5) is designed as a square bar which lies against the lateral surface of the roller (6).

6. Mobile processing unit according to one of Claims 1 to 3, **characterized in that** the stripping device (5) is designed as a spring sheet which lies against the lateral surface of the roller (6).

7. Mobile processing unit according to one of Claims 1 to 3, **characterized in that** the stripping device (5) is designed as a cutting edge which lies against the lateral surface of the roller (6).

8. Mobile processing unit according to one of the preceding claims, **characterized in that** the mobile processing unit (1) has a lubricant supply device which introduces a lubricant between roller (6) and stripping device (5).

9. Mobile processing unit according to one of the preceding claims, **characterized in that** the mobile processing unit (1) can be coupled to a drive vehicle.

## Revendications

1. Unité de traitement mobile (1) pour l'entretien d'espaces verts, en particulier de pelouses et de surfaces herbagères, qui comprend un rotor de traitement (4) orienté transversalement à la direction de conduite (F), supporté de manière à pouvoir tourner autour d'un axe de rotation (2) et présentant des outils de traitement (3), au moins un rouleau (6) coopérant avec un dispositif de raclage (5) et, vu dans la direction de conduite, étant disposé derrière le rotor de traitement du sol (4), **caractérisée en ce que** le dispositif de raclage (5) associé au rouleau (6) est disposé entre le rotor de traitement (4) et le rouleau (6) et, vu dans la direction de conduite (F) de l'unité de traitement (1), est disposé avant le rouleau (6).

2. Unité de traitement mobile selon la revendication 1, **caractérisée en ce que** le dispositif de raclage (5) est reçu de préférence sous contrainte dans un boîtier (7) recevant le rotor de traitement (4) ou est reçu dans un cadre de guidage en hauteur (8) de l'unité de traitement mobile (1).

3. Unité de traitement mobile selon l'une quelconque des revendications précédentes, **caractérisée en ce que** le dispositif de raclage (5) est reçu sous contrainte dans l'unité de traitement mobile (1) en agissant contre le rouleau (6).

4. Unité de traitement mobile selon l'une quelconque des revendications précédentes, **caractérisée en ce que** le dispositif de raclage (5) est réalisé sous forme de barre s'appliquant entre la surface d'enveloppe du rouleau (6).

5. Unité de traitement mobile selon l'une quelconque des revendications 1 à 3, **caractérisée en ce que** le dispositif de raclage (5) est réalisé sous forme de barre carrée s'appliquant contre la surface d'enveloppe du rouleau (6).

6. Unité de traitement mobile selon l'une quelconque des revendications 1 à 3, **caractérisée en ce que** le dispositif de raclage (5) est réalisé sous forme de tôle à ressort s'appliquant contre la surface d'enveloppe du rouleau (6).

7. Unité de traitement mobile selon l'une quelconque des revendications 1 à 3, **caractérisée en ce que** le dispositif de raclage (5) est réalisé sous forme d'arête de coupe s'appliquant contre la surface d'enveloppe du rouleau (6).

8. Unité de traitement mobile selon l'une quelconque des revendications précédentes, **caractérisée en ce que** l'unité de traitement mobile (1) présente un dispositif d'alimentation en lubrifiant introduisant un lubrifiant entre le rouleau (6) et le dispositif de raclage (5).

9. Unité de traitement mobile selon l'une quelconque des revendications précédentes, **caractérisée en ce que** l'unité de traitement mobile (1) peut être accouplée à un véhicule d'entraînement.
